# EUROPEAN PATENT APPLICATION

(11) **EP 3 945 430 A1**
(43) Date of publication of application: **02.02.2022**
(21) Application number: 20187959.0
(22) Date of filing: 27.07.2020
(51) Int. Cl.: G06F 16/23

(54) **REGISTRATION OF A NODE WITH A DECENTRALIZED NETWORK**

(71) Applicant: Siemens Aktiengesellschaft, 80333 München (DE)
(72) Inventor: Sauer, Markus, 81739 München (DE); Singh, Saurabh Narayan, 81739 München (DE)

(57) **Abstract**

The invention relates to a registration method of a node with a decentralized network. The method comprises the steps:
- determining (S1) an amount of verified and/or unverified data transactions and/or registration processes performed by participating nodes of the decentralized network,
- allocating (S2) tokens to the participating nodes, wherein a respective number of tokens for a participating node depends on the respective amount of verified and/or unverified data transactions, and storing the tokens in a respective first token storage of a respective participating node,
- receiving (S3) a registration request from a requesting node for registering with the decentralized network,
- transferring (S4) a share of tokens of a selected participating node from its first storage to a second token storage for registering the requesting node with the decentralized network,
and,
- registering (S5) the requesting node with the decentralized network based on the share of tokens of the selected participating node.

## Description

The present invention relates to a computer-implemented method for registration of a node with a decentralized network, a computer program product for performing said method, a participating node and a monitoring node of the decentralized network.

A decentralized network, e.g. for realization of a distributed database, can be realized as a public network or a private network. In a public network registration is managed openly and a node/device can join the network and participate in a consensus mechanism of the network. In a private network a decision is taken by the congruence of network participating stakeholder nodes. When a new node/device wishes to join the network and participate in the consensus mechanism of the network, both public and private networks have their specific challenges, limitations, and advantages. A public network can lack control with respect to participation, while in a private network the registration or participation management can lack decentralization.

There are multiple ways to realize a consensus mechanism, like for example proof of work, proof of stake, and other Byzantine fault tolerant (BFT) algorithms for decentralization with low performance, whereas algorithms like Raft, proof of authority, which are not BFT, but provide a higher performance. But none of these algorithms can handle the registration of new nodes/stakeholders to the network. These consensus mechanisms incentivize stakeholder's behavior with respect to verification of transactions, but management of participation cannot be tackled by this approach.

It is therefore an objective of the present invention to provide a registration method for a public as well as a private decentralized network.

The object is solved by the features of the independent claims. The dependent claims contain further developments of the invention.

The invention provides according to a first aspect a computer-implemented method for registration of a node with a decentralized network, comprising the method steps:
- determining an amount of verified and/or unverified data and/or falsely proposed transactions and/or registration processes performed by participating nodes of the decentralized network,
- allocating tokens to the participating nodes, wherein a respective number of tokens for a participating node depends on the respective amount of verified and/or unverified and/or falsely proposed data transactions and/or registration processes, and storing the tokens in a respective first token storage of a respective participating node,
- receiving a registration request from a requesting node for registering with the decentralized network,
- transferring a share of tokens of a selected participating node from its first token storage to a second token storage for registering the requesting node with the decentralized network,
   and,
- registering the requesting node with the decentralized network based on the share of tokens of the selected participating node.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties. Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "computer-aided" or "computer-implemented" can be understood to mean for example an implementation of the method in which in particular a processor carries out at least one method step of the method. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. A module can, by way of example, also be a node of the distributed database system that for example performs/realizes the specific functions/features of an applicable module. The respective modules can, by way of example, also be in the form of separate or standalone modules. To this end, the applicable modules can also comprise further elements. These elements are for example one or more interfaces (e.g. database interfaces, communication interfaces - e.g. network interface, WLAN interface) and/or an evaluation unit (e.g. a processor) and/or a memory unit. The interfaces can be used for example to interchange (e.g. receive, convey, send or provide) data. The evaluation unit can be used for example to compare, check, process, assign or calculate data in computer-aided and/or automated fashion. The memory unit can be used for example to store, retrieve or provide data in computer-aided and/or automated fashion.

Within the context of embodiments of the invention, "comprise", in particular in regard to data and/or information, can be understood to mean for example (computer-aided) storage of applicable information or of an applicable datum in a data structure/data record (which e.g. is in turn stored in a memory unit).

Within the context of embodiments of the invention, "assign" or "allocate", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "provision" can also be understood to mean for example loading or storing, for example of a transaction containing applicable data. This can, by way of example, be effected on or by a memory module. "Provision" can also be understood to mean for example transmitting (or sending or conveying) of applicable data from one node to another node of the blockchain or of the distributed database system (or the infrastructure thereof).

Within the context of embodiments of the invention, "(data) transaction" or "(data) transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example. By way of example, within the context of embodiments of the invention, a transaction can also be understood to mean a control transaction and/or confirmation transaction. Alternatively, a transaction can, by way of example, be a data structure that stores data (e.g. the control instructions). A transaction can in particular comprise a program code that provides a smart contract, for example.

By way of example, within the context of embodiments of the invention, a transaction can also be understood to mean a control transaction and/or confirmation transaction. A confirmation transaction is able, for example after successful execution of control transactions, to be stored by a device in the distributed database system (e.g. the device stores the confirmation transaction in the distributed database system). A confirmation transaction can comprise for example a confirmation of an execution of the control instructions of the control transaction by one of the devices if an applicable device from the devices has successfully executed the control instructions of the control transaction.

Alternatively, a transaction can, by way of example, be a data structure that stores data (e.g. the control instructions). A transaction can, by way of example, also be referred to as a message (that is to say a communication message storing data) or can be a message that, e.g., stores applicable data (e.g. control instructions). Embodiments of the invention therefore allows applicable transactions or messages to be interchanged. Transactions can e.g. comprise the control instructions and/or contractual data and/or other data such as video data, user data, measurement data, etc.

Verification of a transaction comprises in particular at least one check of the transaction/the content of the transaction by a node of the decentralized network based on given check rules. Verification of a transaction can in particular be performed based on a particular consensus method, e.g., for distributed, decentralized systems. A checked/verified transaction can further be proposed by a node for insertion of the transaction into a distributed database system. It is further possible that a node falsely proposes a transaction, wherein "proposing a transaction" can for example be understood as providing, executing or sending a transaction. A verified and/or unverified and/or falsely proposed data transaction performed by a node can be monitored by a monitoring node, wherein the monitoring node determines the respective node which executed/sent the respective transaction.

Within the context of embodiments of the invention, "insertion into the distributed database system" and the like can be understood to mean for example that, in particular, a transaction or the transactions or a data block with its transactions is conveyed to one or more nodes of a distributed database system. If these transactions are for example validated successfully (e.g. by the node/s), these transactions are in particular concatenated as a new data block with at least one existing data block of the distributed database system. For this purpose, the applicable transactions are stored for example in a new data block. In particular, this validation and/or concatenation can be performed by a trusted node (e.g. a mining node, a blockchain oracle or a blockchain platform). In particular, a blockchain platform can be understood to mean a blockchain as a service, as proposed in particular by Microsoft or IBM. In particular, a trusted node and/or a node can each store a node checksum (e.g. a digital signature) in a data block (e.g. in the data block validated and generated thereby, which is then concatenated), in order in particular to make it possible to identify the originator of the data block and/or to make it possible to identify the node. In this case, this node checksum indicates which node has for example concatenated the applicable data block with at least one other data block of the distributed database system.

Within the context of embodiments of the invention, a "technical system" can be understood to mean for example a device or multiple devices that are communicatively connected to one another via the decentralized network and/or to a distributed database system.

Within the context of embodiments of the invention, a "program code" (e.g. a smart contract) can be understood to mean for example a program instruction or multiple program instructions, in particular stored in one or more transactions. The program code is in particular executable and can be executed by a distributed database system, for example. This can be realized by means of an execution environment (e.g. a virtual machine). This involves for example a virtual machine being realized by an infrastructure of the distributed database system.

Within the context of embodiments of the invention, "smart contract process" can be understood to mean in particular an execution of a program code (e.g. of the control instructions) in a process by the distributed database system or the infrastructure thereof, i.e. decentralized network.

Within the context of embodiments of the invention, a "smart contract" can be understood to mean for example an executable program code (see in particular the "program code" definition). The smart contract is preferably stored in a transaction of a distributed database system (e.g. a blockchain), for example in a data block of the distributed database system. By way of example, the smart contract can be executed in the same way as explained in the definition of "program code", in particular within the context of embodiments of the invention.

Within the context of embodiments of the invention, a "decentralized network" can be understood as a decentralized data or communication network comprising a plurality of nodes/devices which are connected to each other. Furthermore, the decentralized network can be realized as a public or private network. In particular, the decentralized network can be a decentralized distributed network. Furthermore, the decentralized network can serve as an infrastructure for realizing a distributed database system. The decentralized network can further be also realized at least partly with nodes implemented in a cloud. The decentralized network can also be understood as a peer-to-peer-network.

Within the context of embodiments of the invention, a "distributed database system", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. Such distributed database system can for example be realized based on the decentralized network.

It is also possible, by way of example, for different implementations of a blockchain or DLTS to be used, such as e.g. a blockchain or DLTS that is implemented by means of a directed acyclic graph (DAG), a cryptographic puzzle, a hash graph or a combination of the implementation variants. It is also possible, by way of example, for different consensus methods (consensus algorithms) to be implemented.

A "distributed database system" can also be understood to mean for example a distributed database system that has at least some of its nodes and/or devices and/or infrastructure implemented by a cloud. By way of example, the applicable components are implemented as nodes/devices in the cloud (e.g. as virtual nodes in a virtual machine).

The distributed database system can be a public distributed database system (e.g. a public blockchain) or a closed (or private) distributed database system (e.g. a private blockchain), for example.

Within the context of embodiments of the invention, a "blockchain node", "node", "node of a distributed database system", "a node of the decentralized network" and the like can be understood to mean for example devices (e.g. field devices), computers, smartphones, clients or subscribers that perform operations for (with) the distributed database system (e.g. a blockchain). In particular, such a node can comprise a processor. Such nodes can, by way of example, execute transactions of a distributed database system or the data blocks thereof or insert or concatenate new data blocks with new transactions into the distributed database system by means of new data blocks.

The devices (e.g. the applicable device) are for example devices of a technical system and/or industrial installation and/or of an automation network and/or of a production installation that are in particular also a node of the distributed database system. The devices in this instance can be for example field devices or devices in the Internet of Things that are in particular also a node of the distributed database system. Nodes can, by way of example, also comprise at least one processor, e.g. in order to perform their computer-implemented functionality.

Within the context of embodiments of the invention, "registration" of a node with the decentralized network or the like can be understood as a process of integration of a new/requesting node when access to the network is requested by said node. The registration can further comprise the steps of sending an access request (e.g., a ping) by the requesting node and establishing a connection and connecting to the network.

Within the context of embodiments of the invention, a "token" can be understood as a (virtual) symbol, numeral, or point counted by a counter/numerator based on the respective amount of verified and/or unverified or falsely proposed data transactions performed by a respective node. A token can also be understood as a data structure comprising at least information about verified and/or unverified or falsely proposed data transactions and/or identification information about the respective node.

Within the context of embodiments of the invention, a "share of tokens", which is preferably separately stored and/or locked for a given time range and/or until a certain condition is fulfilled, can in particular be understood as a deposit, credit, or guarantee. Hence, a respective share of tokens is for example locked in a second token storage for a given time range serving as deposit for registration of a requesting node.

Within the context of embodiments of the invention, a "token storage" can be understood as a part of a node's memory or a storage/memory allocated to said node. The token storage preferably comprises a counter/numerator for managing a certain amount of tokens. The first token storage of a node is preferably a storage where tokens can be added or subtracted depending on the node's performance/behavior with respect to transactions and/or registration processes. The second token storage can in particular be separated from the first token storage or realized as a separate part of the first storage.

The proposed registration method allows in particular to manage the registration and/or participation of nodes in a more efficient way by the decentralized network. It allows for example to create a public network with an open access policy, without losing control over its participants. Typical attacks to gain majorities in a public network can be prevented. The access management is based on reputation of participating nodes, wherein the reputation is represented by the respective tokens as deposit. Therefore, the registration method further can improve the quality of participants in the network, i.e., reducing the risk of attacks, in public as well as in private networks. Furthermore, the tokens can provide an additional incentive for participating nodes/stakeholders acting according to given network rules.

According to an embodiment of the method a token can be deducted from or is added to a respective first token storage of one participating node for an unverified or verified data transaction performed by said participating node, respectively.

A node can therefore gain or loose tokens depending on the node's performance with respect to transaction processes performed via the network. Hence, the tokens can be understood as reputation points characterizing the respective node.

According to a further embodiment of the method, the share of tokens of the participating node can be stored as deposit associated with the requesting node in the second token storage.

Therefore, the share of tokens can be taken as guarantee for registering the requesting node. Storing the share of tokens as deposit can in particular be managed through a program code, e.g. a smart contract (process).

According to a further embodiment of the method the share of tokens of the selected participating node can be stored as deposit for a given time range.

According to a further embodiment of the method the registration request can comprise an identifier of the requesting node and/or a qualifier, which is issued by at least one of the participating nodes for the requesting node.

Based on such identifier and/or qualifier a participating node of the decentralized network can for example check the credibility or trustworthiness of the requesting node. The qualifier can for example comprise a qualification information, a unique a reference statement message, e.g., signed by the issuing participating node.

According to a further embodiment of the method the qualifier can be cryptographically signed by the issuing participating node.

Hence, the qualifier can be security protected. The cryptographic protection can be checked by other participating nodes in order to verify the qualifier.

According to a further embodiment of the method the identifier and/or the qualifier can be checked based on at least one given access criterion resulting in a check result, and the requesting node is registered with the decentralized network depending on the resulting check result.

At least on participating node can perform this check in order to decide whether the requesting node can be registered with the network. Such check can for example comprise requesting proof of identity, certificates, or digital signatures, etc.

According to a further embodiment of the method
- each of a plurality of the participating nodes provides at least a share of tokens resulting in a plurality of share of tokens,
- one participating node is selected based on the plurality of shares of tokens
- and the share of tokens of the selected participating node is provided for registering the requesting node.

Preferably, that participating node having the largest number of tokens and/or providing the largest share of tokens is selected. Said participating node can then provide its proposed share of tokens as deposit for registering the requesting node.

According to a further embodiment of the method a size of a respective share of tokens depends on the check result.

Preferably, a respective share of tokens to be provided for registering the requesting node is selected based on the check result of the check regarding the identifier and/or qualifier of the requesting node. A participating node can therefore provide an arbitrary number of tokens as share of tokens, wherein the choice can be based on the check result.

According to a further embodiment of the method after registration of the requesting node with the decentralized network an amount of verified and/or unverified data transactions performed by the requesting node can be determined and
- depending on the amount of unverified data transactions a token is deducted from the second token storage
   or
- depending on the amount of verified data transactions a token is added to the first token storage of the selected participating node and/or a token storage of the requesting node.

Depending on the performance of the requesting node, when registered with the network, the selected participating node can loose or gain tokens. Furthermore, the requesting node can itself gain tokens for verified transactions.

According to an alternative embodiment of the method the participating node to provide the share of tokens can be randomly selected.

Hence, independent of its number of tokens a participating node can be selected to provide a share of tokens (as deposit) for registering the requesting node. Furthermore, the share of tokens provided can also be randomly selected.

According to a further embodiment of the method after registration of the requesting node with the decentralized network an amount of verified and/or unverified data transactions performed by the requesting node can be determined and
- depending on the amount of unverified data transactions the requesting node is deregistered from the decentralized network
   or
- depending on the amount of verified data transactions a token is added to the first token storage of the (randomly) selected participating node and/or requesting node.

Therefore, in case a randomly selected participating node provides a share of tokens for registering the requesting node, the performance of the requesting node can have different effects than in case of a not randomly selected proposing participating node.

According to a further embodiment of the method a token can be added to the first token storage of the selected participating node for a verified data transaction performed by the requesting node until the amount of tokens matches the share of tokens stored in the second token storage.

Therefore, tokens gained for verified transactions performed the requesting node are transferred to the selected participating node until the deposit is balanced. In addition, when the deposit is balanced, the share of tokens can be removed from the second storage of the selected participating node. For example, the share of tokens can be unlocked and/or transferred back to the first token storage of the selected participating node. In other words, when the condition that the deposit is balanced is fulfilled, the deposit is returned to the selected participating node. Until this condition is fulfilled, the deposit is preferably locked and can therefore not be used by the selected participating node.

According to a further embodiment of the method the requesting node is registered as a participating node when the amount of tokens added to the first token storage matches the share of tokens stored in the second token storage.

When the deposit is balanced, the requesting node can be registered as participating node. Hence, a status information assigned to the requesting node can be changed accordingly.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention further provides according to another aspect a participating node of a decentralized network, comprising
- a first token storage configured to store tokens, wherein a number of tokens depends on an amount of verified and/or unverified and/or falsely proposed data transactions and/or registration processes performed by the participating node,
- a second token storage configured to store a share of tokens transferred from the first token storage,
- a transfer module configured to transfer a share of tokens from the first token storage to the second token storage for registering a requesting node with the decentralized network,
   and
- a registration module configured to register the requesting node with the decentralized network based on the share of tokens.

The invention further provides according to another aspect a monitoring node of a decentralized network, comprising
- a monitoring module configured to determine an amount of verified and/or unverified data transactions performed by a node of the decentralized network,
- an allocation module configured to allocate tokens to the node, wherein the number of tokens depends on the respective amount of verified and/or unverified data transactions.

The invention further provides according to another aspect decentralized network configured to perform a registration method to embodiments of the invention.

The decentralized network can for example further comprise/realize a distributed database system.
The invention will be explained in more detail by reference to the accompanying figures.
- Fig. 1:: a flow chart illustrating a first embodiment of the invention;
- Fig. 2:: a flow chart illustrating a second embodiment of the invention;
- Fig. 3:: a flow chart illustrating a third embodiment of the invention;
- Fig. 4:: a block diagram illustrating another embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

A combination according to embodiments of the invention of hardware (components) and software (components) can occur in particular if one portion of the effects according to embodiments of the invention is brought about preferably exclusively by special hardware (e.g. a processor in the form of an ASIC or FPGA) and/or another portion by the (processor- and/or memory-aided) software.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

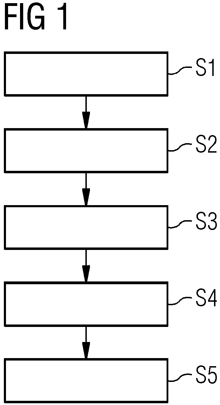

Figure 1 shows a first exemplary embodiment of a computer-implemented method for registration of a node with a decentralized network as a flow chart.

The decentralized network, in particular a decentralized distributed network, comprises a plurality of nodes/devices which can communicate (i.e., send/receive data) which each other. In particular, the decentralized network comprises participating nodes, which can also be called stakeholder (nodes), which can participate in a consensus mechanism of the network and/or the registration method. The participating nodes or at least a part of the participating nodes can form a stakeholder consortia which can manage or govern the registration process. Furthermore, the decentralized network comprises monitoring nodes which are configured to monitor the performance of the participating nodes with respect to data transactions and/or the registration of new nodes.

In step S1 of the method verified and/or unverified and/or falsely proposed data transactions and/or registration processes performed by each participating nodes is monitored by at least one monitoring node and counted resulting in a respective amount of verified and/or unverified and/or falsely proposed data transactions and/or registration processes for the respective participating node. A registration process in particular comprises the steps which are described below in order to register a new node with the decentralized network.

In the next step S2, depending on this amount of verified and/or unverified and/or falsely proposed data transactions and/or registration processes a number of tokens is allocated to the respective participating node. The tokens are stored in a respective token storage of the participating node. Hence, tokens can be allocated to participating nodes as exemplary stake representation.

Tokens can in particular be managed by a counter/numerator which can be implemented in the respective token storage of a node. A token can be a data structure comprising information about transactions and/or registration processes performed by a node. In principle, a token is deducted from or is added to a respective first token storage of one participating node for an unverified or verified data transaction performed by said participating node, respectively. Furthermore, a token can preferably be awarded for a successful registration process performed by a participating node.

Preferably, the monitoring of the node performance with respect to data transactions and/or registration processes is performed continuously or at predefined time steps, such that the allocation of tokens can be updated accordingly.

In the next step S3, a registration request for registering with the decentralized network is received from a requesting node, wherein the requesting node is not yet part of the decentralized network. For example, the requesting node sends a request for accessing a distributed database system realized via decentralized network.

In the next step S4, a share of tokens of a selected participating node is provided and transferred from the first token storage to a second token storage for registering the requesting node with the decentralized network. The share of tokens is preferably a share of the number of tokens stored in the first token storage. The share of tokens can be understood as a deposit or guarantee deposited by the selected participating node for registering the requesting node. The selected participating node is for example randomly selected or selected based on the provided share of tokens.

The second token storage can for example be part of the first token storage, wherein the share of tokens is locked, that means it cannot be increased/decreased for a given time range. Alternatively, the second token storage can be realized as a virtual storage, i.e., the share of tokens is inaccessible and/or unchangeable by the respective participating node for a given time range, wherein the second token storage can be merely assigned to the respective participating node.

In the next step S5, the requesting node is registered with the decentralized network based on the share of tokens provided by the selected participating node, wherein for example the share of tokens is transferred to the second storage and/or locked as a deposit/guarantee/stake for a given time range and/or until a certain condition is fulfilled. Alternatively, the registration can be based on the share of tokens provided by the selected participating node, wherein for example the share of tokens serves as a deposit/guarantee/stake for a given time range and/or until a certain condition is fulfilled. A condition can for example refer to an amount of verified transactions performed by the requesting node after registration. Alternatively, the registration can be based on the share of tokens provided by the selected participating node, wherein the share of tokens of the participating node is stored as deposit associated with the requesting node in the second token storage. Hence, the share of tokens is assigned and/or linked to the requesting node, such that it is possible to store multiple share of tokens in the second token storage of the selected participating node for registering multiple requesting nodes. In other words, a participating node can therefore provide different deposits for different requesting nodes.

Preferably, the share of tokens is locked/stored in the second token storage of the selected participating node until the performance of the requesting node with respect to transactions yields an amount of tokens which can balance the deposit. For example, for a verified data transaction performed by the requesting node after registration, a token is added to the first token storage of the selected participating node until the amount of tokens matches the share of tokens stored in the second token storage. Then, the share of tokens, i.e. the deposit, can be unlocked and/or removed from the second token storage and for example be transferred back to the first token storage of the selected participating node. Furthermore, when the amount of tokens added to the first token storage matches the share of tokens stored in the second token storage, the requesting node is registered as a participating node with the decentralized network. Managing the tokens and/or checking the deposit balance can preferably implemented using a smart contract.

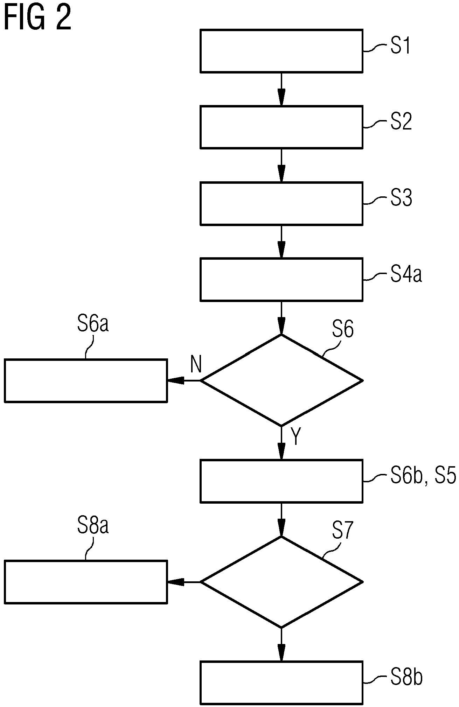

Figure 2 shows a further embodiment of the computer-implemented method for registering a node with the decentralized network.

For each participating node of the decentralized network an amount of verified and/or unverified and/or falsely proposed data transactions and/or registration processes performed by the respective participating node is determined and outputted, step S1. Based on said amount, tokens are allocated to the respective participating node and stored in a respective first token storage of said participating node, step S2. The number of tokens allocated to each node depends on the respective amount of verified and/or unverified and/or falsely proposed data transactions and/or registration processes.

In addition, e.g. in parallel to steps S1 and/or step S2, before or afterwards, at least one registration request is received from a requesting node, step S3. The requesting node can for example be a new node/device requesting access to the decentralized network.

The registration request can comprise an identifier of the requesting node, e.g. a unique identification number or address. Furthermore, the registration request can comprise a qualifier, which is issued by at least one of the participating nodes for the requesting node. The qualifier can for example be a recommendation information issued by one of the participating nodes, comprising for example identification or performance information about the requesting node. The qualifier can for example be cryptographically signed by the issuing participating node, e.g., using a private key.

In response to the received registration request, a share of tokens of a selected participating node is transferred from its first token storage to a second token storage for registering the requesting node with the decentralized network, wherein the participating node is selected based on its provided shares of tokens, step S4a. To this end, each of a number of the participating nodes provides at least a share of tokens resulting in a plurality of share of tokens, i.e., these participating nodes can stake a share of tokens on the requesting node. One participating node is selected based on the plurality of shares of tokens and the share of tokens of the selected participating node is provided for registering the requesting node. For example, the provided shares of tokens from different participating nodes are prioritized, e.g., ordered in a list, based on the respective amount of tokens. The participating node which stakes the highest share of tokens is selected, e.g. from the ordered list. The share of tokens is then stored in a second token storage allocated to the selected participating node. The share of tokens is stored as deposit for registration of the requesting node. The participating nodes can in particular provide the share of tokens based on a check result of a check of the identifier and/or qualifier based on at least one given access criterion.

The identifier and/or the qualifier are checked for example by at least part of the participating nodes based on at least one given access criterion or rule resulting in a check result, step S6. For example, the identifier and/or qualifier can be compared with given access criteria, e.g., permitted identification numbers, certificates etc. The check can in particular be performed in parallel or before the selection of the participating node (step S4a). The resulting check result is provided to the participating nodes of the decentralized network. The requesting node can then be registered with the decentralized network depending on the resulting check result.

In case the check result does not meet the registration criterion, path N, the requesting node is not registered with the decentralized network, step S6a. In this case, a reject message can be sent to the requesting node. In case the check result meets the given registration criterion, path Y, the requesting node is registered with the decentralized network based on the share of tokens of the selected participating node, step S6b.

After registration of the requesting node an amount of verified and/or unverified data transactions performed by the requesting node is determined, step S7. This performance of the requesting node is for example monitored by monitoring nodes of the decentralized network. For each unverified and/or falsely proposed data transaction performed by the requesting node a token is deducted from the second token storage of the selected participating node, step S8a. For each verified data transaction performed by the requesting node, a token is added to the first token storage of the selected participating node and/or to a token storage of the requesting node, step S8b. Hence, for a verified data transaction performed by the requesting node a token can be added to the first token storage of the selected participating node until the deposit is balanced. Afterwards, for further verified data transactions performed by the requesting node, tokens can be allocated to the token storage of the requesting node.

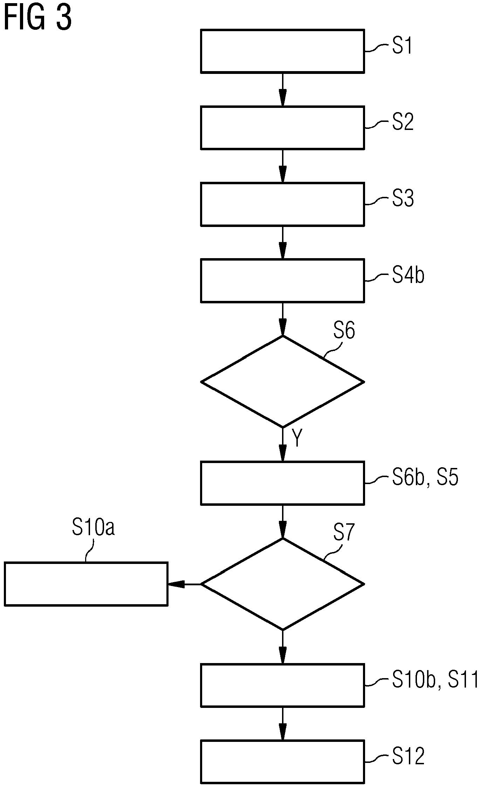

Figure 3 shows a further embodiment of the computer-implemented method for registering a node with the decentralized network. The decentralized network comprises participating nodes and monitoring nodes. The performance of the participating nodes with respect to proposals and/or verification of data transactions and/or with respect to registration processes is monitored by the monitoring nodes, step S1. Based on the performance of the participating nodes, the monitoring nodes allocate tokens, which represent the performance behavior, to the participating nodes, step S2. Therefore, for a participating node, a respective number of tokens for a participating node depends on the respective amount of verified and/or unverified and/or falsely proposed data transactions and/or registration processes.

When a new node requests access to the decentralized network, it sends a registration request, step S3, comprising preferably at least an identifier which allows identification of the new node by the network. For registration of the new node with the network, one of the participating nodes is randomly selected, and a share of tokens of this selected participating node is stored as deposit for registering the new node with the decentralized network, step S4b. This deposit of the selected participating node is transferred from a first token storage to a second token storage of the selected participating node. The deposit is preferably locked on the second token storage for a given time range and/or until a predefined condition is fulfilled. Such condition can for example be checked using a smart contract.

After registration of the requesting node with the decentralized network an amount of verified and/or unverified data transactions performed by the requesting node is monitored and determined by the monitoring nodes, step S7. Depending on the amount of unverified and/or falsely proposed data transactions the requesting node is deregistered from the decentralized network, step S10a. For example, if the amount of unverified and/or falsely proposed data transactions are above a given certain threshold, the requesting node is deregistered from the decentralized network. A new registration of said node can for example be prevented by storing the identifier of said node and/or deducing a certain access criterion thereof.

Alternatively, depending on the amount of verified data transactions performed by the requesting node after registration, tokens are added to the first token storage of the selected participating node and/or requesting node, step SlOb. Therefore, for a verified data transaction performed by the requesting node a token is added to the first token storage of the selected participating node until the amount of tokens matches the share of tokens stored in the second token storage, step S11. After a predefined time range and/or after an amount of recorded verified data transactions performed by the requesting node, the requesting node can be registered as a participating node, step S12. In particular, this state change to "participating node" can be performed when the amount of tokens added to the first token storage matches the share of tokens stored in the second token storage, i.e., when the deposit is balanced. Such state change from "requesting node" to "participating node" can in particular be counted/registered as a successful registration performed by the selected participating node.

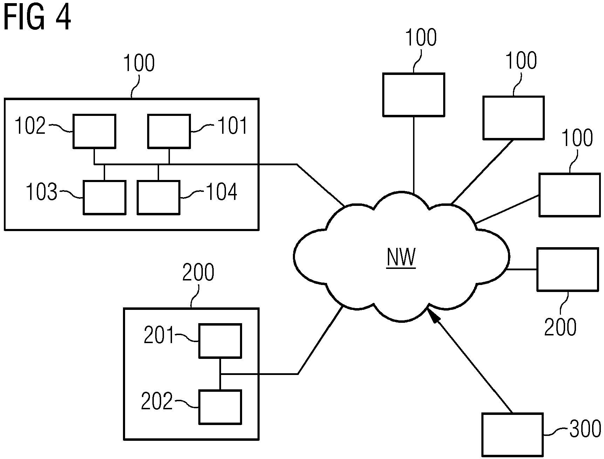

Figure 4 shows a further embodiment of the invention in block representation. A decentralized network NW comprises a plurality of nodes which can be connected to each other. The nodes can be either participating nodes 100, also called stakeholders, or monitoring nodes 200. In particular, the nodes can be devices of a technical system, e.g., a factory.

The decentralized network can for example comprise a distributed database, wherein the participating nodes 100 can communicate, exchange and/or store data (e.g., control data). The monitoring nodes 200 in particular manage the allocation of tokens representing the performance of a node, wherein a token is allocated to a node for an unverified or verified data transaction performed by said node. The participating nodes 100 are in particular configured to register a new node 300 which requests access to the decentralized network 300.

A participating node 100 comprises a first token storage 101 which is configured to store tokens, wherein a number of tokens depends on an amount of verified and/or unverified and/or falsely proposed data transactions and/or registration processes performed by the participating node 100. It further comprises a second token storage 102 configured to store a share of tokens transferred from the first token storage 101. The second token storage 102 can for example be part of the first token storage 101 or realized separately. The first and/or second token storage 101, 102 can further comprise a counter for counting tokens stored in the respective token storage. The counters of the first and second token storage 101, 102 can for example be linked, such that tokens can be moved (e.g., as deposit) from the first token storage 101 to the second token storage 102, wherein a token can be deducted/removed from the first token storage 101 and subsequently added to the second token storage 102. To this end, the participating node 100 further comprises a transfer module 103 configured to transfer a share of tokens from the first token storage to the second token storage. The share of tokens is in particular stored in the second token storage for registering a requesting node with the decentralized network. The participating node 100 further comprises a registration module 104 configured to register the requesting node with the decentralized network based on the share of tokens. The registration module 104 can for example further comprise a check unit (not shown) which is configured to check a received identifier and/or a qualifier of a requesting node 300 based on at least one given access criterion. The check unit outputs a check result, and the requesting node 300 is registered with the decentralized network depending on the resulting check result. A respective registration module 104 of a participating node can for example further comprise a synchronization unit (not shown) configured to synchronize check results and/or registration information among the other participating nodes. The registration module 104 can further be configured to manage the deregistration of a node, e.g., in case of falsely proposed transactions and/or unverified transactions performed by said node.

A monitoring node 200 comprises a monitoring module 201 and an allocation module 202. The monitoring module 201 is configured to determine an amount of verified and/or unverified and/or falsely proposed data transactions performed by a node of the decentralized network. The allocation module 202 is configured to allocate tokens to a node, wherein the number of tokens depends on the respective amount of verified and/or unverified and/or falsely proposed data transactions and/or registration processes performed by said node. Hence, the monitoring node 200 is preferably connected to the participating nodes, managing the token allocation. Furthermore, when a new node 300 is registered with the decentralized network the monitoring node 200 can allocate tokens to said newly added node 300. Preferably, the new node 300 comprises a first token storage for storing allocated tokens. Alternatively, the tokens allocated to the new node can be registered by the monitoring node and for example stored externally.

The invention can further be described by way of example and in other words as follows:
A stakeholder governance algorithm is described which allows to manage the addition of new participants/new nodes to a distributed network based on incentive mechanism and rewards of better behavior in the sense that new nodes gets access by on bail by other already participating nodes. Hence, through behavior, recommendations, and inter-relations between nodes a trustful technical access network of reputation and recommendation can be established.

Such exemplary network system can have the following basic components: nodes forming the decentralized distributed network, wherein each node is a either a stakeholder node and/or part of a stakeholder consortia or a network observer node (also called monitoring node). Reputation points/Tokens can be allocated to each participating node.

A new stakeholder, i.e. a new participating node, can be added according to the following steps: At the time the network starts, every stakeholder starts for example with zero reputation point. With every new verified transaction, the observer nodes can award reputation points to the stakeholders which proposed the transaction. For every invalid transaction, reputation points are deducted from the respective stakeholder. When a new node requests access to the network, there are two options: a) The new node knows someone in the network and convinces one or more stakeholders to propose it as a participant in sense of a recommendation or b) it announces itself as a participant to the network including a proof that there are recommendations available for its participation. The proof can for example be a reference statement message signed with the referee's key, a unique ID of the stakeholder for back referencing or similar.

In the first case (a), the stakeholders perform a due diligence (e.g. requesting proof of identity, certificates, digital signatures, offline meeting and signing a contract) to decide whether they want to propose this new node as a new participant to the network. Then, at least some stakeholders stake some reputation points if they want to propose this new node as a participant to the network. Based on the due diligence result, the stakeholders decide on how much reputation points they want to stake on this new participant. The current stakeholders review the proposals coming from all stakeholders and prioritize them based on the reputation points at stake. The stakeholders and/or observer nodes decide and allow the new node to be a part of the network. If the new node becomes part of the network, the reputation points are managed as reputation deposit for this new node by the stakeholders and/or the observer nodes, e.g., through a smart contract. In case the newly added node misbehaves, i.e. for example proposes transactions which are not verified, the proposing stakeholder loses its staked reputation points.

In the second case, the new node sends a ping to the network and the participating nodes of the network collectively perform a due diligence. Then, one stakeholder is chosen at random to propose the new node as new participant. In case of misbehavior by the newly added node, the randomly selected stakeholder is not liable for losing reputation points but the newly added node is banned from the network.

When a node creates/proposes a valid transaction, the node gets some reputation points. Part of the reputation points is accumulated to the original stakeholder which proposed this node to be part of the network.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for registration of a node with a decentralized network, comprising the method steps:
- determining (S1) an amount of verified and/or unverified and/or falsely proposed data transactions and/or registration processes performed by participating nodes of the decentralized network,
- allocating (S2) tokens to the participating nodes, wherein a respective number of tokens for a participating node depends on the respective amount of verified and/or unverified and/or falsely proposed data transactions and/or registration processes, and storing the tokens in a respective first token storage of a respective participating node,
- receiving (S3) a registration request from a requesting node for registering with the decentralized network,
- transferring (S4) a share of tokens of a selected participating node from its first token storage to a second token storage for registering the requesting node with the decentralized network,
and,
- registering (S5) the requesting node with the decentralized network based on the share of tokens of the selected participating node.

2. Computer-implemented method according to claim 1, wherein a token is deducted from or is added to a respective first token storage of one participating node for an unverified or verified data transaction performed by said participating node, respectively.

3. Computer-implemented method according to one of the preceding claims, wherein the share of tokens of the participating node is stored as deposit associated with the requesting node in the second token storage.

4. Computer-implemented method according to claim 3, wherein the share of tokens of the selected participating node is stored as deposit for a given time range.

5. Computer-implemented method according to one of the preceding claims, wherein the registration request comprises an identifier of the requesting node and/or a qualifier, which is issued by at least one of the participating nodes for the requesting node.

6. Computer-implemented method according to claim 5, wherein the qualifier is cryptographically signed by the issuing participating node.

7. Computer-implemented method according to one of the preceding claims, wherein the identifier and/or the qualifier are checked (S6) based on at least one given access criterion resulting in a check result, and the requesting node is registered with the decentralized network depending on the resulting check result (S6a, S6b).

8. Computer-implemented method according to one of the preceding claims, wherein
- each of a plurality of the participating nodes provides at least a share of tokens resulting in a plurality of share of tokens,
- one participating node is selected (S4a) based on the plurality of shares of tokens
- and the share of tokens of the selected participating node is provided for registering the requesting node.

9. Computer-implemented method according to claims 7 to 8, wherein a size of a respective share of tokens depends on the check result.

10. Computer-implemented method according to one of the preceding claims, wherein after registration of the requesting node with the decentralized network an amount of verified and/or unverified data transactions performed by the requesting node is determined (S7) and
- depending on the amount of unverified data transactions a token is deducted from the second token storage (S8a)
or
- depending on the amount of verified data transactions a token is added to the first token storage of the selected participating node and/or a token storage of the requesting node (S8b).

11. Computer-implemented method according to one of the claims 1 to 7, wherein the participating node to provide the share of tokens is randomly selected (S4b).

12. Computer-implemented method according to claim 11, wherein after registration of the requesting node with the decentralized network an amount of verified and/or unverified data transactions performed by the requesting node is determined (S7) and
- depending on the amount of unverified data transactions the requesting node is deregistered from the decentralized network (S10a)
or
- depending on the amount of verified data transactions a token is added to the first token storage of the selected participating node and/or requesting node (SlOb).

13. Computer-implemented method according to one of the preceding claims, wherein for a verified data transaction performed by the requesting node a token is added (S11) to the first token storage of the selected participating node until the amount of tokens matches the share of tokens stored in the second token storage.

14. Computer-implemented method according to claim 13, wherein the requesting node is registered (S12) as a participating node when the amount of tokens added to the first token storage matches the share of tokens stored in the second token storage.

15. Computer program product directly loadable into the internal memory of a digital computer, comprising software code portions for performing the method steps of one of the preceding claims when said computer program product is run on a computer.

16. Participating node (100) of a decentralized network, comprising
- a first token storage (101) configured to store tokens, wherein a number of tokens depends on an amount of verified and/or unverified and/or falsely proposed data transactions and/or registration processes performed by the participating node,
- a second token storage (102) configured to store a share of tokens transferred from the first token storage,
- a transfer module (103) configured to transfer a share of tokens from the first token storage to the second token storage for registering a requesting node with the decentralized network,
and
- a registration module (104) configured to register the requesting node with the decentralized network based on the share of tokens.

17. Monitoring node (200) of a decentralized network, comprising
- a monitoring module (201) configured to determine an amount of verified and/or unverified and/or falsely proposed data transactions performed by a node of the decentralized network,
- an allocation module (202) configured to allocate tokens to the node, wherein the number of tokens depends on the respective amount of verified and/or unverified data transactions.

18. Decentralized network configured to perform a registration method according to one of the claims 1 to 15.
